# EUROPEAN PATENT APPLICATION

(11) **EP 2 998 827 A1**
(43) Date of publication of application: **23.03.2016**
(21) Application number: 15185008.8
(22) Date of filing: 14.09.2015
(51) Int. Cl.: G06F 1/26, H04L 12/10, H04N 7/18

(54) **POE NETWORK CAMERA SYSTEM AND POE NETWORK CAMERA THEREOF**

(30) Priority: 19.09.2014 TW 103132498
(71) Applicant: Vivotek Inc., New Taipei City 235 (TW)
(72) Inventor: Chen, Ming-Tsung, 235 New Taipei City (TW)
(74) Representative: Becker Kurig Straus

(57) **Abstract**

A network camera system (10) includes a network camera (14) and a power-over-Ethernet switch (12) for providing network power. The network camera (14) is connected to the power-over-Ethernet switch (12) and includes a casing (20), a main board (22), and a splitting circuit board (24). The main board (22) is disposed in the casing (20) for operating the network camera (14). The splitting circuit board (24) is disposed in the casing (20) and connected to the main board (22) and the power-over-Ethernet switch (12). The splitting circuit board (24) includes a signal transceiver (26) and a power transceiver (28). The signal transceiver (26) is used for performing network signal transmission between the power-over-Ethernet switch (12) and the main board (22). The power transceiver (28) is used for splitting a first splitting power from the network power to the main board (22) as an operating power of the network camera (14).

## Description

### Field of the Invention

The present invention relates to a network camera system utilizing a splitting circuit board disposed in a network camera to split network power and a network camera thereof according to the pre-characterizing clauses of claims 1 and 13.

### Background of the Invention

In general, a conventional network camera is usually connected to an external power source via a power cord for obtaining an operating power, and is connected to a control terminal (e.g. an image control host) via a network cable for establish signal transmission between the control terminal and the network camera. However, if an installer wants to set up a network camera system with many network cameras, the wiring design of the network camera system can be very complicated since each network camera needs to be connected to the external power source and the control terminal.

With development of power-over-Ethernet technology, the network camera could also be connected to a power-over-Ethernet switch via a network cable to obtain a network power transmitted from the power-over-Ethernet switch connected to the external power source and establish network signal transmission between the network camera and the control terminal via the power-over-Ethernet switch.

However, if the installer wants to set up an additional network camera, the installer also needs to set up an additional power-over-Ethernet switch to be connected to the additional network camera and the pervious power-over-Ethernet switch for establishing network signal transmission, and the additional power-over-Ethernet switch also needs to be connected to the external power source for providing a network power to the additional network camera, so as to make the related installation process time-consuming and strenuous. Furthermore, if there is no external power source around the position where the network camera is set up, the installer needs to set up an external power source in advance. Accordingly, it may not only cause much inconvenience in setting up the network camera, but also cause the aesthetic problem due to complicated wiring of the external power source and the power-over-Ethernet switch. Moreover, since the installer needs to have a corresponding construction license for wiring the external power source in some countries, it could further increase the construction cost and time for setting up the network camera, so as to limit the practical application of the network camera.

### Summary of the Invention

This in mind, the present invention aims at providing a network camera system adopting the design in which the splitting circuit board is disposed in the network camera, to achieve the purpose that the network camera could get the operating power by splitting the network power without additionally connecting to a power-over-Ethernet switch, so as to improve efficiency of the network camera system in use of the network power. Furthermore, via the aforesaid network splitting design, the network camera system of the present invention could directly transmit the remaining power to an additional network camera without additionally setting up a power-over-Ethernet switch. In such a manner, the present invention could efficiently solve the prior art problem that the process for setting up an additional network camera is time-consuming and strenuous, so as to greatly improve convenience and flexibility in setting up the network camera system.

This is achieved by a network camera system and a network camera thereof according to claims 1 and 13. The dependent claims pertain to corresponding further developments and improvements.

As will be seen more clearly from the detailed description following below, the claimed network camera system includes a power-over-Ethernet switch and at least one first network camera. The power-over-Ethernet switch is used for providing a network power. The at least one first network camera is connected to the power-over-Ethernet switch via a network cable. The at least one first network camera includes a first casing, a first main board, and a first splitting circuit board. The first main board is disposed in the first casing for operating the at least one first network camera. The first splitting circuit board is disposed in the first casing and connected to the first main board and the power-over-Ethernet switch. The first splitting circuit board includes a first signal transceiver and a first power transceiver. The first signal transceiver is used for performing network signal transmission between the power-over-Ethernet switch and the first main board. The first power transceiver is used for selectively splitting a first splitting power from the network power to the first main board as an operating power of the at least one first network camera.

The claimed network camera is connected to a power-over-Ethernet switch via a network cable and includes a casing, a main board, and a splitting circuit board. The main board is disposed in the casing for operating the network camera. The splitting circuit board is disposed in the casing and connected to the main board and the power-over-Ethernet switch. The splitting circuit board includes a signal transceiver and a power transceiver. The signal transceiver is used for performing network signal transmission between the power-over-Ethernet switch and the main board. The power transceiver is used for selectively splitting a splitting power from the network power to the main board as an operating power of the network camera.

### Brief Description of the Drawings

In the following, the invention is further illustrated by way of example, taking reference to the accompanying drawings thereof:
FIG. 1 is diagram of a network camera system according to an embodiment of the present invention, and
FIG. 2 is a functional diagram of the network camera system in FIG. 1.

### Detailed Description

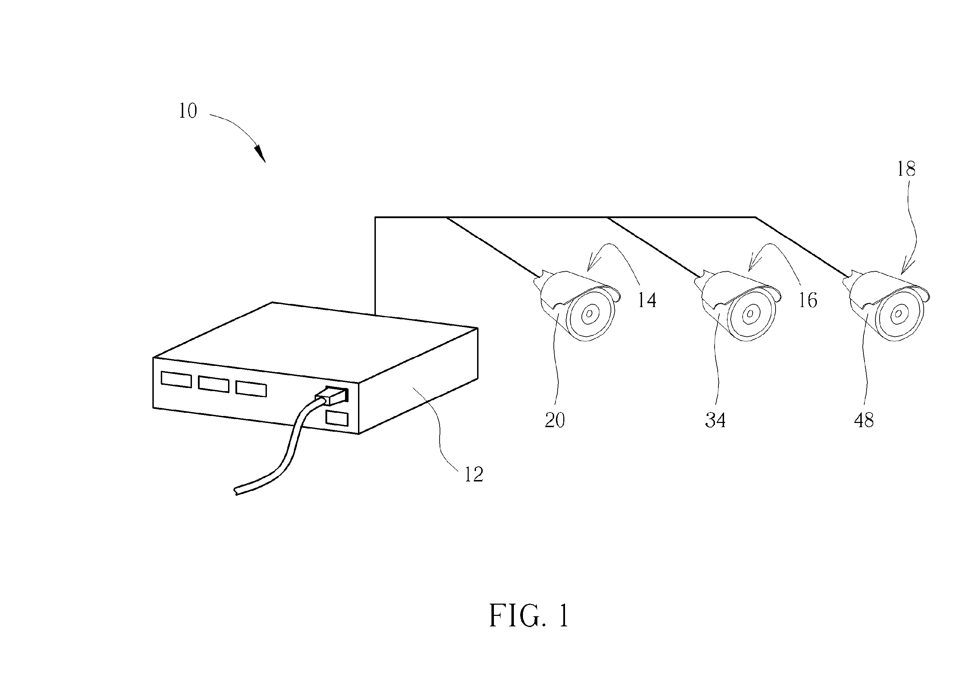

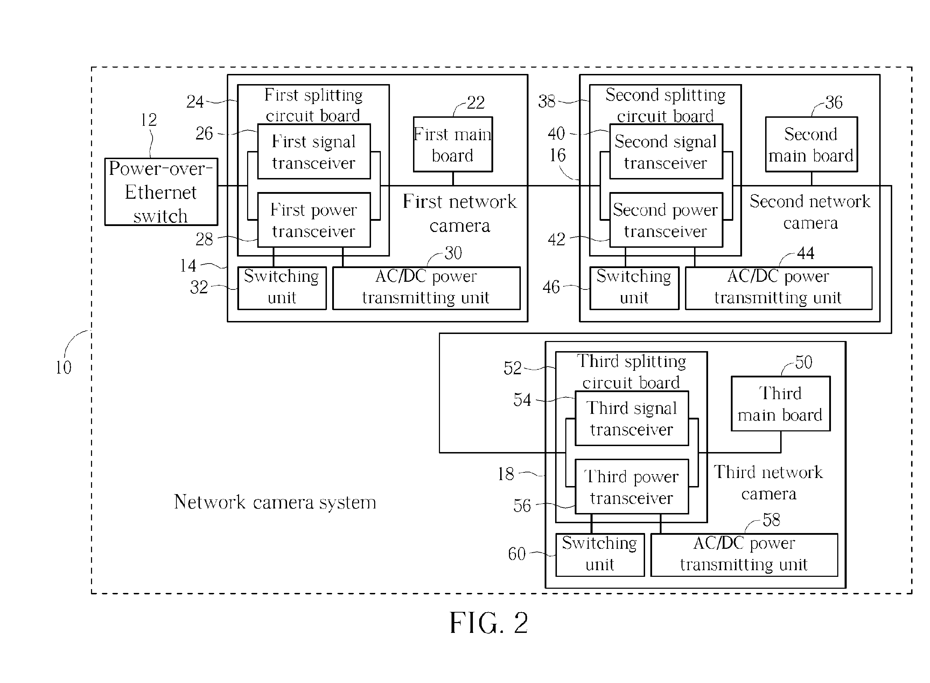

Please refer to FIG. 1 and FIG. 2. FIG. 1 is diagram of a network camera system 10 according to an embodiment of the present invention. FIG. 2 is a functional diagram of the network camera system 10 in FIG. 1. As shown in FIG. 1 and FIG. 2, the network camera system 10 includes a power-over-Ethernet switch 12, at least one first network camera 14, at least one second network camera 16, and at least one third network camera 18. Amount of the first network camera 14, the second network camera 16, and the third network camera 18 is not limited to one as shown in FIG. 1, but could vary with the practical application of the network camera system 10. The power-over-Ethernet switch 12 is connected to the first network camera 14 and a control terminal (e.g. an image control host) in a network cable connecting manner for providing a network power to the first network camera 14 and establishing network signal transmission between the first network camera 14 and the control terminal, so as to perform image surveillance management of the first network camera 14. As for the power-over-Ethernet principle and the wiring design of the power-over-Ethernet switch 12, the related description is omitted herein since it is commonly seen in the prior art.

As shown in FIG. 1 and FIG. 2, the first network camera 14 is connected to the power-over-Ethernet switch 12 via a network cable. The first network camera 14 includes a first casing 20, a first main board 22, and a first splitting circuit board 24. The first main board 22 is disposed in the first casing 20 for operating the first network camera 14, such as performing the image capturing function of the first network camera 14. The first splitting circuit board 24 is disposed in the first casing 20 and is connected to the first main board 22 and the power-over-Ethernet switch 12 for splitting the network power and transmitting network signals. To be more specific, the first splitting circuit board 24 includes a first signal transceiver 26 and a first power transceiver 28. The first signal transceiver 26 is used for performing network signal transmission between the power-over-Ethernet switch 12 and the first main board 22, so that the network camera system 10 could control the first network camera 14 to perform the related image processing operations (e.g. image data transmission, image capturing, or image capturing angle adjustment) in a signal transmission manner.

For improving flexibility of the first network camera 14 on power selection, the first power transceiver 14 could be used for selectively splitting the network power transmitted from the power-over-Ethernet switch 12 according to actual operation power of the first network camera 14. To be more specific, as shown in FIG. 2, in this embodiment, the first splitting circuit board 24 could further include an AC/DC power transmitting unit 30 and a switching unit 32. The AC/DC power transmitting unit 30 is connected to the first power transceiver 28 and could be an AC/DC power port (but not limited thereto) for connecting to an external power source to get an AC/DC power. The switching unit 32 is connected to the first power transceiver 28 for controlling the first power transceiver 28 to transmit the AC/DC power transmitted from the AC/DC power transmitting unit 30 or a splitting power of the network power to the first main board 22 as an operating power of the first network camera 14.

In such a manner, if the network power transmitted from the power-over-Ethernet switch 12 is used as the operating power of the first network camera 14, the switching unit 32 could control the first power transceiver 28 to split a first splitting power from the network power to the first main board 22, so that the first main board 22 could utilize the first splitting power to operate the first network camera 14. On the other hand, if the AC/DC power transmitted from the external power source is used as the operating power of the first network camera 14, the switching unit 32 could control the first power transceiver 28 to directly transmit the AC/DC power to the first main board 22.

The second network camera 16 could have the same design with the first network camera 14 and the related description could be reasoned by analogy. That is to say, as shown in FIG. 1 and FIG. 2, the second network camera 16 is connected to the first network camera 14 via a network cable. The second network camera 16 includes a second casing 34, a second main board 36, and a second splitting circuit board 38. The second main board 36 is disposed in the second casing 34 for operating the second network camera 16, such as performing the image capturing function of the second network camera 16. The second splitting circuit board 38 is disposed in the second casing 34 and is connected to the second main board 36 and the first network camera 14 for splitting the network power and transmitting network signals. To be more specific, the second splitting circuit board 38 includes a second signal transceiver 40 and a second power transceiver 42. The second signal transceiver 40 is used for performing network signal transmission between the power-over-Ethernet switch 12 and the second main board 36, so that the network camera system 10 could control the second network camera 16 to perform the related image processing operations (e.g. image data transmission, image capturing, or image capturing angle adjustment) in a signal transmission manner.

Similarly, for improving flexibility of the second network camera 16 on power selection, the second power transceiver 42 could be used for selectively splitting the network power transmitted from the power-over-Ethernet switch 12 according to actual operation power of the second network camera 16. To be more specific, as shown in FIG. 2, in this embodiment, the second splitting circuit board 38 could further include an AC/DC power transmitting unit 44 and a switching unit 46. The AC/DC power transmitting unit 44 is connected to the second power transceiver 42 and could be an AC/DC power port (but not limited thereto) for connecting to an external power source to get an AC/DC power. The switching unit 46 is connected to the second power transceiver 42 for controlling the second power transceiver 42 to transmit the AC/DC power transmitted from the AC/DC power transmitting unit 44 or a splitting power of the network power to the second main board 36 as an operating power of the second network camera 16.

In such a manner, if the network power transmitted from the power-over-Ethernet switch 12 is used as the operating power of the first network camera 14 and the operating power of the second network camera 16, after the switching unit 32 controls the first power transceiver 28 to split the first splitting power from the network power to the first main board 22, the switching unit 46 could control the second power transceiver 42 to split a second splitting power from the remaining power after the network power passes through the first network camera 14 to the second main board 36. Accordingly, the first main board 22 could utilize the first splitting power to operate the first network camera 14, and the second main board 36 could utilize the second splitting power to operate the second network camera 16. On the other hand, if the AC/DC power transmitted from the external power source is used as the operating power of the second network camera 16, the switching unit 46 could control the second power transceiver 42 to directly transmit the AC/DC power to the second main board 36. As for the related description for other derived embodiments (e.g. the first network camera 14 utilizing the AC/DC power as the operating power of the first network camera 14 and the second network camera 16 utilizing the network power provided from the power-over-Ethernet switch 12 as the operating power of the second network camera 16), it could be reasoned by analogy according to the aforesaid embodiment and be omitted herein.

The third network camera 18 could have the same design with the first network camera 14 and the second network camera 16 and the related description could be reasoned by analogy. That is to say, as shown in FIG. 1 and FIG. 2, the third network camera 18 is connected to the second network camera 16 via a network cable. The third network camera 18 includes a third casing 48, a third main board 50, and a third splitting circuit board 52. The third main board 50 is disposed in the third casing 48 for operating the third network camera 18, such as performing the image capturing function of the third network camera 18. The third splitting circuit board 52 is disposed in the third casing 48 and is connected to the third main board 50 and the second network camera 16 for split the network power and transmitting network signals. To be more specific, the third splitting circuit board 52 includes a third signal transceiver 54 and a third power transceiver 56. The third signal transceiver 54 is used for performing network signal transmission between the power-over-Ethernet switch 12 and the third main board 50, so that the network camera system 10 could control the third network camera 18 to perform the related image processing operations (e.g. image data transmission, image capturing, or image capturing angle adjustment) in a signal transmission manner.

Similarly, for improving flexibility of the third network camera 18 on power selection, the third power transceiver 56 could be used for selectively splitting the network power transmitted from the power-over-Ethernet switch 12 according to actual operation power of the third network camera 18. To be more specific, as shown in FIG. 2, in this embodiment, the third splitting circuit board 52 could further include an AC/DC power transmitting unit 58 and a switching unit 60. The AC/DC power transmitting unit 58 is connected to the third power transceiver 56 and could be an AC/DC power port (but not limited thereto) for connecting to an external power source to get an AC/DC power. The switching unit 60 is connected to the third power transceiver 56 for controlling the third power transceiver 56 to transmit the AC/DC power transmitted from the AC/DC power transmitting unit 58 or a splitting power of the network power to the third main board 50 as an operating power of the third network camera 18.

In such a manner, if the network power transmitted from the power-over-Ethernet switch 12 is used as the operating power of the first network camera 14, the operating power of the second network camera 16 and the operating power of the third network camera 18, after the switching unit 32 controls the first power transceiver 28 to split the first splitting power from the network power to the first main board 22 and the switching unit 46 controls the second power transceiver 42 to split the second splitting power from the remaining power after the network power passes through the first network camera 14 to the second main board 36, the switching unit 60 could control the third power transceiver 56 to transmit the remaining power after the network power passes through the first network camera 14 and the second network camera 16 to the third main board 50. Accordingly, the third main board 50 could utilize the aforesaid remaining power to operate the third network camera 18. To be noted, as shown in FIG. 1, since the third network camera 18 is utilized as the last network camera, the third network camera 18 could directly transmit the remaining power to the third main board 50 without splitting the network power.

On the other hand, if the AC/DC power transmitted from the external power source is used as the operating power of the third network camera 18, the switching unit 60 could control the third power transceiver 56 to directly transmit the AC/DC power to the third main board 50. As for the related description for other derived embodiments (e.g. the second network camera 16 utilizing the AC/DC power and the first network camera 14 and the third network camera 18 utilizing the network power), it could be reasoned by analogy according to the aforesaid embodiment and be omitted herein.

It should be mentioned that amount of the network cameras in series connection in the network camera system 10 is not limited to three mentioned in the aforesaid embodiment. In other words, as long as the total wiring length of network cables is not greater than the allowable network signal transmission distance and each network camera could utilize the aforesaid network power splitting design or be connected to the external power source to get the operating power, the amount of the network cameras in series connection in the network camera system 10 could vary according to the practical application of the network camera system 10. Furthermore, the AC/DC power transmitting unit and the switching unit are omissible components for simplifying the design of the network camera. For example, in the embodiment without the AC/DC power transmitting unit and the switching unit, the network camera system 10 could get the operating power of the network camera only by the aforesaid power splitting design. In the embodiment without the switching unit, the power transceiver could be used for directly transmitting the AC/DC power to the main board as the operating power of the network camera after determining the AC/DC power transmitting unit of the network camera is connected to the external power source.

In summary, the present invention adopts the design that the splitting circuit board is disposed in the network camera, to achieve the purpose that the network camera could get the operating power by splitting the network power without additionally connecting to a power-over-Ethernet switch, so as to improve efficiency of the network camera system in use of the network power. Furthermore, via the aforesaid network splitting design, the network camera system of the present invention could directly transmit the remaining power to an additional network camera without additionally setting up a power-over-Ethernet switch. In such a manner, the present invention could efficiently solve the prior art problem that the process for setting up an additional network camera is time-consuming and strenuous, so as to greatly improve convenience and flexibility in setting up the network camera system.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A network camera system (10) **characterized by**:
a power-over-Ethernet switch (12) for providing a network power; and
at least one first network camera (14) connected to the power-over-Ethernet switch (12) via a network cable, the at least one first network camera (14) comprising:
a first casing (20);
a first main board (22) disposed in the first casing (20) for operating the at least one first network camera (14); and
a first splitting circuit board (24) disposed in the first casing (20) and connected to the first main board (22) and the power-over-Ethernet switch (12), the first splitting circuit board (24) comprising:
a first signal transceiver (26) for performing network signal transmission between the power-over-Ethernet switch (12) and the first main board (22); and
a first power transceiver (28) for selectively splitting a first splitting power from the network power to the first main board (22) as an operating power of the at least one first network camera (14).

2. The network camera system (10) of claim 1, **characterized in that** the first splitting circuit board (24) further comprises:
an AC/DC power transmitting unit (30) connected to the first power transceiver (28) for connecting to an external power source to transmit an AC/DC power to the first power transceiver (28).

3. The network camera system (10) of claim 2, **characterized in that** the first power transceiver (28) is further used for transmitting the AC/DC power transmitted from the AC/DC transmitting unit (30) to the first main board (22) as the operating power of the at least one first network camera (14) when determining the AC/DC transmitting unit (30) is connected to the external power source.

4. The network camera system (10) of claim 2, **characterized in that** the first splitting circuit board (24) further comprises:
a switching unit (32) connected to the first power transceiver (28) for controlling the first power transceiver (28) to transmit the AC/DC power transmitted from the AC/DC transmitting unit (30) or the first splitting power to the first main board (22) as the operating power of the at least one first network camera (14).

5. The network camera system (10) of claim 1, further **characterized by**:
at least one second network camera (16) connected to the at least one first network camera (14) via a network cable, the at least one second network camera (16) comprising:
a second casing (34);
a second main board (36) disposed in the second casing (34) for operating the at least one second network camera (16); and
a second splitting circuit board (38) disposed in the second casing (34) and connected to the second main board (36) and the power-over-Ethernet switch (12), the second splitting circuit board (38) comprising:
a second signal transceiver (40) for performing network signal transmission between the power-over-Ethernet switch (12) and the second main board (36); and
a second power transceiver (42) for selectively splitting a second splitting power from a first remaining power after the network power passes through the at least one first network camera (14) to the second main board (36) as an operating power of the at least one second network camera (16).

6. The network camera system (10) of claim 5, **characterized in that** the second splitting circuit board (38) further comprises:
an AC/DC power transmitting unit (44) connected to the second power transceiver (42) for connecting to an external power source to transmit an AC/DC power to the second power transceiver (42).

7. The network camera system (10) of claim 6, **characterized in that** the second power transceiver (42) is further used for transmitting the AC/DC power transmitted from the AC/DC transmitting unit (44) to the second main board (36) as the operating power of the at least one second network camera (16) when determining the AC/DC transmitting unit (44) is connected to the external power source.

8. The network camera system (10) of claim 6, **characterized in that** the second splitting circuit board (38) further comprises:
a switching unit (46) connected to the second power transceiver (42) for controlling the second power transceiver (42) to transmit the AC/DC power transmitted from the AC/DC transmitting unit (44) or the second splitting power to the second main board (36) as the operating power of the at least one second network camera (16).

9. The network camera system (10) of claim 5, further **characterized by**:
at least one third network camera (18) connected to the at least one second network camera (16) via a network cable, the at least one third network camera (18) comprising:
a third casing (48);
a third main board (50) disposed in the third casing (48) for operating the at least one third network camera (18); and
a third splitting circuit board (52) disposed in the third casing (48) and connected to the third main board (50) and the second splitting circuit board (38), the third splitting circuit board (52) comprising:
a third signal transceiver (54) for performing network signal transmission between the power-over-Ethernet switch (12) and the third main board (50); and
a third power transceiver (56) for selectively splitting a third splitting power from a second remaining power after the network power passes through the at least one first network camera (14) and the at least one second network camera (16) to the third main board (50) as an operating power of the at least one third network camera (18).

10. The network camera system (10) of claim 9, **characterized in that** the third splitting circuit board (52) further comprises:
an AC/DC power transmitting unit (58) connected to the third power transceiver (56) for connecting to an external power source to transmit an AC/DC power to the third power transceiver (56).

11. The network camera system (10) of claim 10, **characterized in that** the third power transceiver (56) is further used for transmitting the AC/DC power transmitted from the AC/DC transmitting unit (58) to the third main board (50) as the operating power of the at least one third network camera (18) when determining the AC/DC transmitting unit (58) is connected to the external power source.

12. The network camera system (10) of claim 10, **characterized in that** the third splitting circuit board (52) further comprises:
a switching unit (60) connected to the third power transceiver (56) for controlling the third power transceiver (56) to transmit the AC/DC power transmitted from the AC/DC transmitting unit (58) or the third splitting power to the third main board (50) as the operating power of the at least one third network camera (18).

13. A network camera (14) connected to a power-over-Ethernet switch (12) via a network cable and **characterized by**:
a casing (20);
a main board (22) disposed in the casing (20) for operating the network camera (14); and
a splitting circuit board (24) disposed in the casing (20) and connected to the main board (22) and the power-over-Ethernet switch (12), the splitting circuit board (24) comprising:
a signal transceiver (26) for performing network signal transmission between the power-over-Ethernet switch (12) and the main board (22); and
a power transceiver (28) for selectively splitting a splitting power from the network power to the main board (22) as an operating power of the network camera (14).

14. The network camera (14) of claim 13, **characterized in that** the network camera (14) is connected to another network camera (16) via a network cable, and the power transceiver (28) is used for transmitting a remaining power after the network power passes through the network camera (14) to the another network camera (16).

15. The network camera (14) of claim 13, **characterized in that** the splitting circuit board (24) further comprises:
an AC/DC power transmitting unit (30) connected to the power transceiver (28) for connecting to an external power source to transmit an AC/DC power to the power transceiver (28).

16. The network camera (14) of claim 15, **characterized in that** the power transceiver (28) is further used for transmitting the AC/DC power transmitted from the AC/DC transmitting unit (30) to the main board (22) as the operating power of the network camera (14) when determining the AC/DC transmitting unit (30) is connected to the external power source.

17. The network camera (14) of claim 15, **characterized in that** the splitting circuit board (24) further comprises:
a switching unit (32) connected to the power transceiver (28) for controlling the power transceiver (28) to transmit the AC/DC power transmitted from the AC/DC transmitting unit (30) or the splitting power to the main board (2) as the operating power of the network camera (14).
